# EUROPÄISCHE PATENTSCHRIFT

(11) **EP 0 370 342 B1**
(45) Veröffentlichungstag und Bekanntmachung des Hinweises auf die Patenterteilung: **11.08.1993**
(21) Anmeldenummer: 89120972.8
(22) Anmeldetag: 11.11.1989
(51) Int. Cl.: B29C 67/14, B29C 65/00, B29D 31/00, B29C 67/18, E04C 3/28, B62D 29/04

(54) **Leichtbauteil**
Light weight constructional element
Elément de construction allégé

(30) Priorität: 25.11.1988 DE 3839855
(43) Veröffentlichungstag der Anmeldung: 30.05.1990
(73) Patentinhaber: BAYER AG, 51368 Leverkusen (DE)
(72) Erfinder: Goldbach, Hubert, Dipl.-Ing, D 4030 Ratingen 8 (DE); Koch, Boris, Dipl.-Ing, D-5632 Wermelskirchen 3 (DE)

(56) Entgegenhaltungen:
- DE-A- 1 784 185
- DE-A- 1 956 826
- US-A- 3 770 545

## Beschreibung

Die Erfindung betrifft ein Leichtbauteil aus einem schalenförmigen Grundkörper, dessen Innenraum Verstärkungsrippen aufweist, welche mit dem Grundkörper fest verbunden sind.

Derartige Leichtbauteile finden in entsprechender Gestaltung Verwendung für Fahrzeugteile, tragende Elemente für Büromaschinen, Konstruktionselemente für Dekorationszwecke und dergleichen.

Sie wurden bisher aus Metall hergestellt, wobei beispielsweise ein aus Stahlblech oder Aluminiumblech tiefgezogener Grundkörper mit Verstärkungsrippen verschweißt, vernietet oder verschraubt wurde (DE-OS 1 704 387). Andererseits stellte man solche Leichtbauteile aus Kunststoff durch Spritzgießen in einem Stück her. Es hat sich jedoch gezeigt, daß reine Kunststoffteile bei vertretbarer Dimensionierung der Querschnitte geringere Festigkeiten und vor allem geringere Steifigkeiten aufweisen als vergleichbare Leichtbauteile aus Metall.

Es besteht die Aufgabe, ein Leichtbauteil zu schaffen, welches einfacher herstellbar ist und gute Festigkeits-und Steifigkeitseigenschaften aufweist.

Gelöst wird diese Aufgabe dadurch, daß die Verstärkungsrippen aus angespritztem Kunststoff bestehen und deren Verbindung mit dem Grundkörper an diskreten Verbindungsstellen über Durchbrüche im Grundkörper erfolgt, durch welche der Kunststoff hindurch- und über die Flächen der Durchbrüche hinausreicht.

Dadurch wird erreicht, daß ein dünnwandiger Grundkörper verwendet werden kann, welcher aus Metallblech im Tiefziehverfahren herstellbar ist. Es eignen sich insbesondere unbehandelte, verzinkte und/oder mit einem Primer und gegebenenfalls Haftvermittler versehene Stahlbleche, unbehandelte, eloxierte und/oder mit einem Primer und gegebenenfalls einem Haftvermittler versehene Aluminiumbleche. Es lassen sich für den Grundkörper aber auch durch Warmpressen verformte Kunststoffbleche verwenden, welche aus Thermoplasten mit Einlagen aus Glasfasermatten oder Synthesefasermatten bestehen. Als Kunststoffe zum Anspritzen der Verstärkungsrippen eignen sich insbesondere teilkristalline Kunststoffe, wie glasfaserverstärktes Polyamid-6, Polyamid-6.6, Polybutylenterephthalat, Polyphenylensulfid oder Propylen.

Besonders geeignete Anwendungen für derartige Leichtbauteile sind Strukturteile für Kraftfahrzeugtüren, Stoßfängerträger, Front- und Heckschalen für PKW, Türschweller, Tragrahmen für Büromaschinen sowie Dekorationselemente, welche erhöhte Festigkeit und Steifigkeit aufweisen müssen.

Herstellen lassen sich diese Leichtbauteile, indem man den durch Tiefziehen oder Warmverpressen vorgeformten Grundkörper in ein Spritzgießwerkzeug mit entsprechend gestaltetem Formhohlraum einlegt und die Verstärkungsrippen und gegebenenfalls sonstigen Verstärkungen anspritzt.

Überraschenderweise hat sich gezeigt, daß auf diese Weise je nach Kunststoff die Knickstabilität des Grundkörpers aus Stahlblech bis über 80 % gesteigert werden kann; die Torsionssteifigkeit läßt sich bei V-Verrippung um mehr als das 10-fache erhöhen, bei Kreuzverrippung steigt sie noch höher. Das an sich spröde Bruchverhalten von kurzglasfaserverstärkten Thermoplasten wird durch das duktile Verhalten der Metallteile positiv beeinflußt, so daß die Gefahr des Splitterns des Kunststoffes nicht gegeben ist. Bei Verwendung von Kunststoffblechen für den Grundkörper lassen sich ähnliche Festigkeitserhöhungen erzielen. Bei Verwendung eines metallischen Grundkörpers wird der lineare Wärmeausdehnungskoeffizient im wesentlichen durch das Metall bestimmt.

Gemäß einer besonderen Ausführungsform bestehen die Verankerungen aus Sicken, welche entweder in die Rippen hineingerichtet oder von ihnen weggerichtet sind.

Diese Sicken können runden, länglichen, aber auch unregelmäßigen Querschnitt besitzen.

Besonders vorteilhaft ist es, Sicken mit Durchbrüchen zu kombinieren.

Alle diese Ausführungsformen zeichnen sich durch besonders gute Aufnahme von Schubspannungen aus.

Vorzugsweise weist der Grundkörper mindestens teilweise eine Überzugschicht auf, welche aus dem gleichen Kunststoff wie die Verstärkungsrippen besteht.

Auf diese Weise läßt sich der Grundkörper mit einer optisch ansprechenden Oberfläche versehen, so daß er z.B. eine bestimmte Farbe und/oder Strukturoberfläche (Narbung, Muster) aufweist. Bei einem metallischen Grundkörper dient eine solche Überzugschicht insbesondere auch als Korrosionsschutz und ist für alle besonders gefährdeten Flächen zu empfehlen.

Besonders vorteilhaft ist es, wenn die Ränder der Durchbrüche Verformungen aufweisen.

Dadurch wird gerade in diesem kritischen Bereich die Oberfläche des Grundkörpers vergrößert. Als Verformungen eignen sich sickenartige Einbuchtungen der Ränder der Durchbrüche. Die Ränder können aber auch zusätzlich eingeschnitten und die entstandenen Zungen abgewinkelt oder verdreht sein, wodurch besonders feste Verbindungen erzielbar sind. Durch solche Verformungen wird der Kraftfluß zwischen Grundkörper und Verstärkungsrippen sowie sonstigen angespritzen Verstärkungen verbessert. In der Regel wird man die Verformungen in den Innenraum des Grundkörpers hinein richten, weil man auf diese Weise eine glatte Außenfläche des Grundkörpers erzielen kann.

Vorzugsweise besitzen die Verstärkungsrippen an den Verbindungsstellen mit dem Grundkörper einen verbreiterten Fuß.

Die damit vergrößerte Kontaktfläche zwischen Grundkörper und Verstärkungsrippen erhöht die Haftung und damit insbesondere die Aufnahme von Schubkräften.

Es ist auch von besonderem Vorteil, wenn die zwischen den Verstärkungsrippen und den Seitenwänden des Grundkörpers verbleibenden Freiräume trapezförmigen Querschnitt aufweisen statt eines spitzen Dreiecksquerschnittes.

Dadurch werden zum einen die Kontaktflächen mit dem Grundkörper vergrößert und zum anderen ist der Kraftfluß zwischen den Rippen günstiger. Der Übergang zwischen den einzelnen Flächen der Verstärkungsrippen sollte abgerundet sein, um Kerbwirkungen auszuschließen.

In der Zeichnung ist das neue Leichtbauteil in mehreren Ausführungsbeispielen rein schematisch dargestellt und nachstehend näher erläutert. Es zeigen:
- Fig. 1: einen Grundkörper in Form eines Längsholms für ein Kraftfahrzeug in räumlicher Darstellung,
- Fig. 2: einen Grundkörper in Form eines Tragrahmens für eine Büromaschine in räumlicher Darstellung und
- Fig. 3: eine Auswahl von verschiedenen Möglichkeiten der Verformungen der Ränder der Durchbrüche.

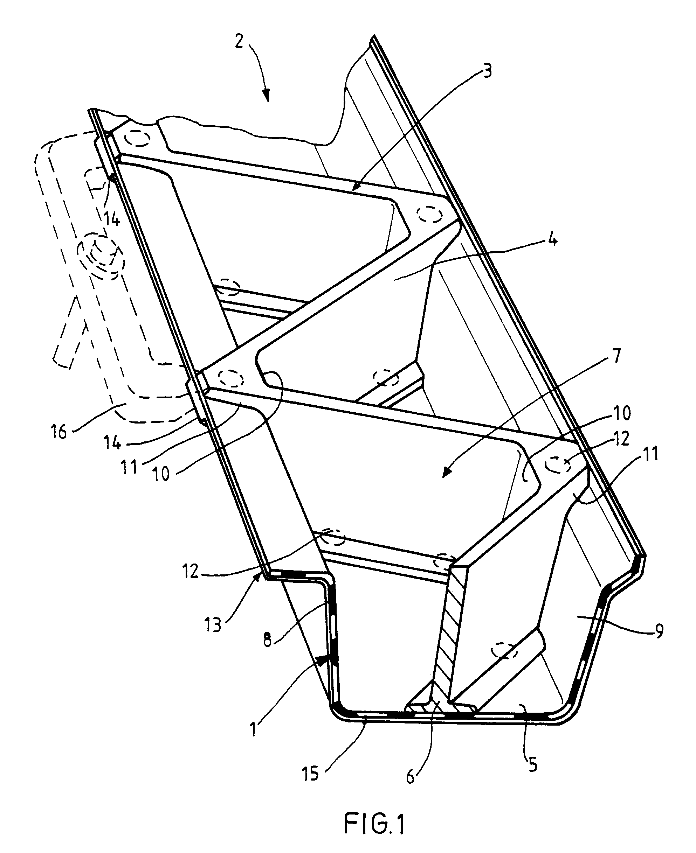

In Fig. 1 besteht das Leichtbauteil aus einem Grundkörper 1 in Form eines Längsholmes 1 für einen PKW. Er besteht aus tiefgezogenem Stahlblech, welches mit einem Haftvermittler behandelt wurde. In seinem Innenraum 2 sind V-förmige Verstärkungsrippen 3 aus Polyamid-6 mit 30 Gew.-% Glasfasergehalt vorgesehen. Diese Verstärkungsrippen 3 erstrecken sich mit einem Steg 4 über die gesamte Tiefe des Innenraumes 2 und weisen zum Boden 5 des Längsholms 1 hin einen verbreiterten Fuß 6 auf. Die Verstärkungsrippen 3 bilden mit dem Grundkörper 1 trapezartige Freiräume 7, wobei an den Seitenwänden 8, 9 des Längsholmes 1 Verbindungsstege 10 aus dem gleichen Kunststoff vorhanden sind, welche parallel zu den Seitenwänden 8, 9 verlaufen und daran fest haften. Sie weisen in etwa die gleiche Stärke auf wie die Verstärkungsrippen 3. Zwischen den Verstärkungsrippen 3 und dem Längsholm 1 sind gestrichelt dargestellte Verankerungen in Form von Sicken und Durchbrüchen 12 vorgesehen, durch welche der Kunststoff auf die Außenseite 13 hindurchreicht und dort Blöcke 14 bildet. Die Außenseite 13 ist mit einer Überzugschicht 15 des gleichen Kunststoffes versehen. Zur Demonstration der Anspritztechnik ist der Angußkanal 16 eines nicht dargestellten Formwerkzeuges gestrichelt symbolisiert.

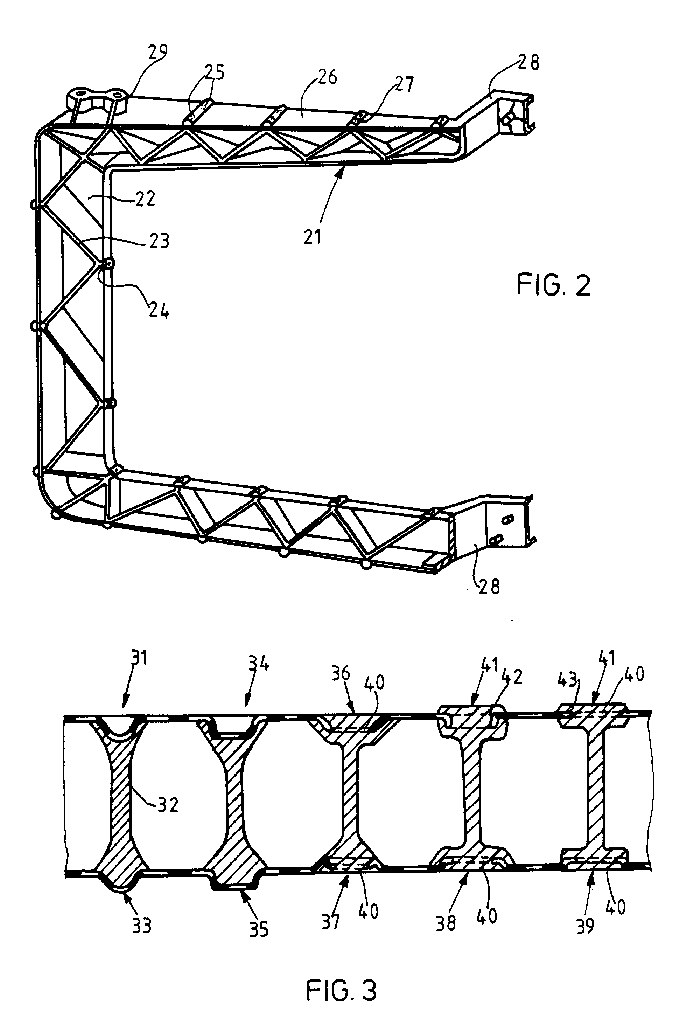

In Fig. 2 besteht der Grundkörper 21 aus durch Warmpressen verformtem Kunststoffblech aus Polyamid mit eingelegter Glasfasermatte von einem Flächengewicht von 1950 g/m² bei 1 mm Blechdicke und 78 Gew.-% Glasanteil. Im Innenraum 22 dieses Grundkörpers 21 sind Verstärkungsrippen 23 aus Polyamid-6.6 mit einem Glasfasergehalt von 35 Gew.-% angeordnet. An den Verbindungsstellen 24 zwischen dem Grundkörper 21 und den Verstärkungsrippen 23 weist der Grundkörper 21 gestrichelt dargestellte Verformungen (Sicken) 25 auf, durch welche der Kunststoff der Verstärkungsrippen 23 hindurchreicht und auf der Außenseite 26 Wülste 27 bildet. Außerdem sind Anschlußflansche 28 und Verstärkungsaugen 29 aus dem gleichen Kunststoff mit angespritzt.

Die in Fig. 3 dargestellten verschiedenartigen Verankerungen 31 stellen lediglich eine besonders geeignete Auswahl aus einer Vielzahl weiterer Möglichkeiten dar.

Die Verankerung 31 besteht aus einer Verformung nach Art einer Halbrundsicke, und zwar in die Rippe 32 hineinweisend. Die Verankerung 33 besitzt ebenfalls die Form einer Halbrundsicke, jedoch von der Rippe 32 wegweisend.

Die Verankerungen 34 und 35 haben die Form napfartiger Sicken. Auch die Verankerungen 36, 37, 38, 39 sind im wesentlichen napfartig gestaltet, besitzen aber zusätzlich Durchbrüche 40. Die Verankerung 41 besteht ebenfalls aus einem Durchbruch mit rechtwinkliger Randverformung 42. Die Verankerung 43 schließlich weist lediglich einen Durchbruch 40 auf.

## Patentansprüche

1. Leichtbauteil aus einem schalenförmigen Grundkörper (1, 21), dessen Innenraum Verstärkungsrippen (3, 23) aufweist, welche mit dem Grundkörper fest verbunden sind, dadurch gekennzeichnet, daß die Verstärkungsrippen (3, 23) aus angespritztem Kunststoff bestehen und deren Verbindung mit dem Grundkörper (1, 21) an diskreten Verbindungsstellen (11, 24) über Durchbrüche (12, 25, 40) im Grundkörper (1, 21) erfolgt, durch welche der Kunststoff hindurch- und über die Flächen der Durchbrüche (12, 25, 40) hinausreicht.

2. Leichtbauteil nach Anspruch 1, dadurch gekennzeichnet, daß die Verankerungen aus Sicken (31, 33, 34, 35, 36, 37, 38, 39, 41) bestehen.

3. Leichtbauteil nach Anspruch 1 oder 2, dadurch gekennzeichnet, daß der Grundkörper (1) mindestens teilweise eine Überzugschicht (15) aufweist, welche aus dem gleichen Kunststoff wie die Verstärkungsrippen (3) besteht.

4. Leichtbauteil nach einem der Ansprüche 1, 2 oder 3, dadurch gekennzeichnet, daß die Ränder der Durchbrüche (40) Verformungen (42) aufweisen.

5. Leichtbauteil nach einem der Ansprüche 1 bis 4, dadurch gekennzeichnet, daß die Verstärkungsrippen (3) an den Verbindungsstellen (11) mit dem Grundkörper (1) einen verbreiterten Fuß (6) aufweisen.

6. Leichtbauteil nach einem der Ansprüche 1 bis 5, dadurch gekennzeichnet, daß die zwischen den Verstärkungsrippen (3) verbleibenden Freiräume (7) trapezförmigen Querschnitt aufweisen.

## Claims

1. A lightweight constructional element comprising a shell-shaped basic body (1, 21) the interior of which possesses reinforcing ribs (3, 23) which are permanently connected to the basic body, characterised in that the reinforcing ribs (3, 23) consist of plastics material applied by injection moulding and the connection of said ribs to the basic body (1, 21) is effected at discrete connection points (11, 24) via openings (12, 25, 40) in the basic body (1, 21), where the plastics material extends through said openings (12, 25, 40) and beyond the surfaces thereof.

2. A lightweight constructional element as claimed in Claim 1, characterised in that the anchoring means comprise beads (31, 33, 34, 35, 36, 37, 38, 39, 41).

3. A lightweight constructional element as claimed in Claim 1 or 2, characterised in that the basic body (1) at least partially comprises a coating layer (15) which consists of the same plastics material as the reinforcing ribs (3).

4. A lightweight constructional element as claimed in one of Claims 1, 2 or 3, characterised in that the edges of the openings (40) comprise deformations (42).

5. A lightweight constructional element as claimed in one of Claims 1 to 4, characterised in that the reinforcing ribs (3) possess a widened foot (6) at the points of connection (11) to the basic body (1).

6. A lightweight constructional element as claimed in one of Claims 1 to 5, characterised in that the free spaces (7) remaining between the reinforcing ribs (3) possess a trapezoidal cross-section.

## Revendications

1. Elément de construction léger composé d'un corps de base (1, 21) en forme de coquille dont la cavité présente des nervures de renforcement (3, 23) qui sont fixées rigidement au corps de base, caractérisé en ce que les nervures de renforcement (3, 23) sont faites d'une matière plastique injectée et que leur assemblage au corps de base (1, 21) se produit en des points de liaison discrets (11, 24), à travers des perforations (12, 25, 40) pratiquées dans le corps de base (1, 21) à travers lesquelles la matière plastique traverse et déborde sur les surfaces des perforations (12, 25, 40).

2. Elément léger selon la revendication 1, caractérisé en ce que les ancrages sont composés de moulures (31, 33, 34, 35, 36, 37, 38, 39, 41).

3. Elément léger selon la revendication 1 ou 2, caractérisé en ce que le corps de base (1) présente au moins en partie une couche de revêtement qui est composée de la même matière plastique que les nervures de renforcement (3).

4. Elément léger selon une des revendications 1, 2 et 3, caractérisé en ce que les bords des perforations (40) présentent des déformations (42).

5. Elément léger selon une des revendications 1 à 4, caractérisé en ce que les nervures de renforcement (3) présentent un pied élargi (6) dans les zones (11) d'assemblage avec le corps de base (1).

6. Elément léger selon une des revendications 1 à 5, caractérisé en ce que les espaces libres (7) qui subsistent entre les nervures de renforcement (3) présentent une section trapézoïdale.
